# FASCICULE DE BREVET EUROPEEN

(11) **EP 3 452 324 B1**
(45) Date de publication et mention de la délivrance du brevet: **01.04.2020**
(21) Numéro de dépôt: 17721195.0
(22) Date de dépôt: 05.04.2017
(51) Int. Cl.: B60K 6/448, B60K 6/52, B60W 10/06, B60W 10/08, B60W 20/17, B60K 17/356, B60W 20/13, B60W 10/26, B60K 6/44, B60W 50/00

(54) **PROCEDE DE PILOTAGE D'UNE MACHINE ELECTRIQUE D'UN GROUPE MOTOPROPULSEUR HYBRIDE EN FONCTION DE LA CONSIGNE CONDUCTEUR**
VERFAHREN ZUR STEUERUNG EINER ELEKTRISCHEN MASCHINE EINES HYBRIDANTRIEBSSTRANGS AUF BASIS DES VOM FAHRER AUSGEWÄHLTEN SOLLWERTS
METHOD FOR CONTROLLING AN ELECTRICAL MACHINE OF A HYBRID POWERTRAIN ON THE BASIS OF THE SET VALUE SELECTED BY THE DRIVER

(30) Priorité: 02.05.2016 FR 1653924
(43) Date de publication de la demande: 13.03.2019
(73) Titulaire: PSA Automobiles SA, 78300 Poissy (FR)
(72) Inventeur: BALENGHIEN, Olivier, 93390 Clichy sous Bois (FR); AUBOIS, Valerie, 93700 Drancy (FR)
(86) Numéro de dépôt international: PCT/FR2017/050796
(87) Numéro de publication internationale: WO 2017/191387

(56) Documents cités:
- WO-A1-2014/027152
- DE-A1-102013 001 095
- FR-A1- 3 025 474
- JP-A- 2009 248 913
- US-A1- 2010 030 416

## Description

Le domaine de l'invention concerne un procédé de pilotage d'une machine électrique d'un groupe motopropulseur hybride en fonction de la consigne du conducteur pour respecter une contrainte acoustique et garantir un niveau de recharge d'un accumulateur d'énergie électrique.

Il existe de nombreuses architectures de groupe motopropulseur pour les véhicules hybrides. Parmi elles, un type comprend une machine de traction thermique attelée au train avant, une machine de traction électrique attelée au train arrière ou au train avant et alimentée par un accumulateur d'énergie électrique de haute puissance et une machine électrique apte à prélever un couple de prélèvement sur un couple moteur fourni par le moteur thermique de traction pour recharger l'accumulateur électrique. A des fins d'agrément de conduite il est constamment recherché de réduire le bruit acoustique et vibratoire généré par le groupe motopropulseur et principalement émis par le moteur thermique. Or, la recharge de l'accumulateur d'énergie électrique lors du roulage augmente la charge du moteur thermique et donc le bruit et les vibrations.

Une solution connue consiste à adapter le niveau de recharge électrique à la conduite du conducteur pour que le couple moteur total qui est fourni par le moteur thermique ne dépasse pas un plafond de couple. Le plafond est choisi pour respecter une contrainte acoustique et vibratoire acceptable pour les passagers. Par ailleurs, le groupe motopropulseur est configuré pour réduire le couple de prélèvement lorsque la consigne du conducteur augmente. Cependant, cette solution augmente le temps de recharge, ce qui réduit par conséquent le temps de roulage en mode tout électrique du véhicule.

On connaît également le brevet US6,137,250 décrivant un procédé de contrôle du démarrage d'un moteur thermique dédié exclusivement à l'entrainement d'un générateur électrique pour la fourniture d'énergie à une machine de traction électrique. Le procédé prévoit le démarrage ou l'arrêt du moteur thermique lorsque les conditions de roulage permettent de couvrir le bruit et les vibrations du groupe motopropulseur. Bien qu'intéressant, ce procédé de contrôle ne s'applique qu'aux architectures d'hybridation série.

On connaît des documents de brevets WO-2014027152-A1 et FR3025474-A1 un procédé conforme au préambule de la revendication 1.

On connaît également des documents de brevets JP-2009248913-A et US-2010030416-A1 une prise en compte de contraintes acoustiques lors de la recharge d'une batterie de traction par déplacement d'un point de fonctionnement d'un moteur thermique, mais pas de façon optimale.

Il existe donc un besoin d'augmenter les capacités de recharge électrique d'un véhicule hybride et de proposer un niveau de nuisance acoustique et vibratoire acceptable pour le conducteur et les passagers. Il est également recherché une solution pour des architectures hybrides plus évoluées et notamment dans lesquelles la recharge d'énergie électrique est opérée en partie en prélevant du couple sur le moteur thermique de traction du véhicule.

Plus précisément, l'invention concerne un procédé de pilotage d'une première machine électrique d'un groupe motopropulseur hybride d'un véhicule automobile comprenant un moteur thermique de traction et une deuxième machine électrique de traction alimentée par un accumulateur électrique, et dans lequel le moteur thermique de traction fournit un couple moteur calculé pour couvrir au moins des besoins d'un couple de consigne du conducteur dédié à un couple aux roues du véhicule et d'un couple de prélèvement prélevé par la première machine électrique pour au moins recharger l'accumulateur électrique, le couple de prélèvement étant piloté à une première consigne égale à une limite supérieure de couple prédéterminée de laquelle est soustrait le couple de consigne du conducteur, et lorsque le couple de consigne du conducteur est supérieur à un seuil prédéterminé, le couple de prélèvement étant piloté à une deuxième consigne égale à une limite inférieure de couple prédéterminée.

Selon l'invention, la limite supérieure de couple est configurée de sorte que le bruit acoustique généré par le groupe motopropulseur soit inférieur à une contrainte acoustique prédéterminée, la limite supérieure et la limite inférieure étant de valeur constante lorsque la vitesse du véhicule est inférieure à un seuil de vitesse du véhicule, et la limite inférieure et la limite supérieure étant augmentées en fonction de la valeur de la vitesse du véhicule lorsqu'il roule à une vitesse supérieure au seuil de vitesse .

Avantageusement, la limite inférieure de couple est configurée de sorte qu'un niveau de recharge de l'accumulateur électrique résultant du couple de prélèvement soit égal à un niveau de recharge prédéterminé de l'accumulateur électrique.

Dans une variante, le seuil de couple est configuré de sorte qu'il soit égal à la différence de couple entre la limite supérieure et la limite inférieure.

Il est également prévu selon l'invention un véhicule automobile comprenant un groupe motopropulseur hybride configuré pour mettre en œuvre l'un quelconque des modes de réalisation du procédé précédemment.

Grâce à l'invention, le niveau de recharge de l'accumulateur électrique de puissance dédié à la traction électrique est maintenu à un niveau suffisant lorsque la consigne du conducteur augmente. Cette fonction de pilotage autorise une augmentation du couple moteur total fourni par le moteur thermique car le conducteur agit avec une forte volonté sur la pédale d'accélération. En considérant un critère acoustique du groupe motopropulseur, l'augmentation du bruit du groupe motopropulseur ressentie dans l'habitacle est acceptable dans cette situation car elle est associée à sa demande de couple.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :

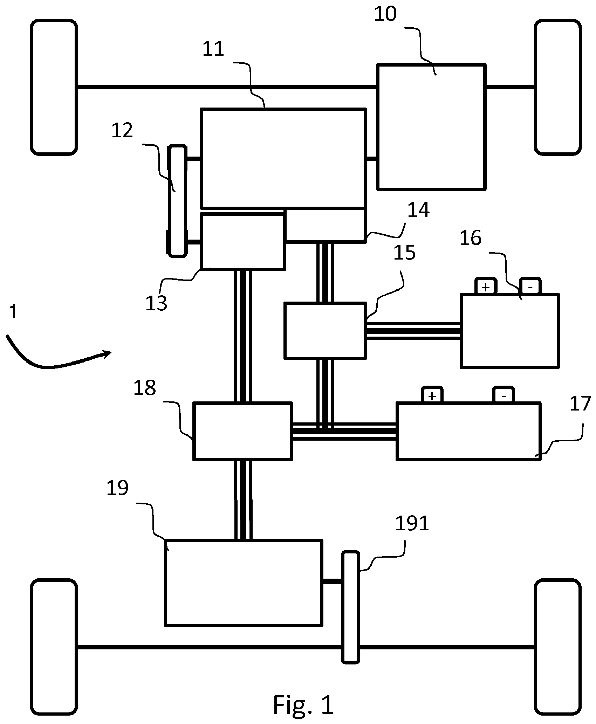

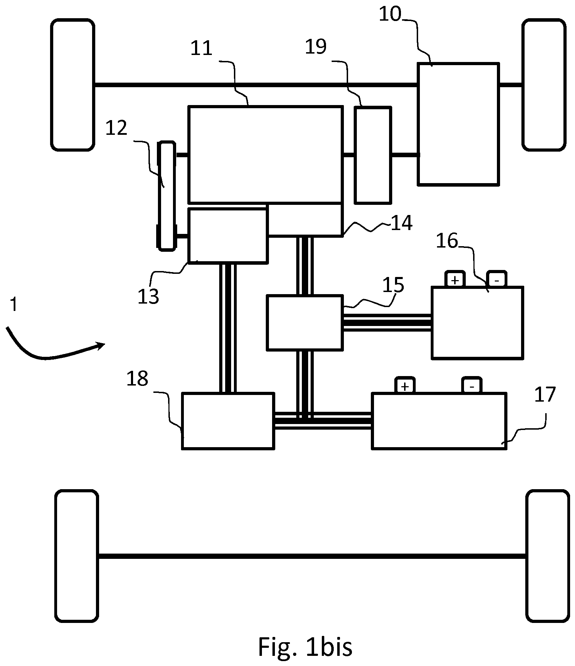

- la figure 1 est un schéma représentant une architecture de groupe motopropulseur hybride permettant d'exécuter le procédé de pilotage selon l'invention ;
- la figure 1bis est un schéma représentant un autre exemple d'architecture de groupe motopropulseur hybride permettant d'exécuter le procédé de pilotage selon l'invention ;
- la figure 2 est un diagramme représentant le déroulement du procédé de pilotage de la machine électrique du groupe motopropulseur selon l'invention ;
- la figure 3 est un graphique représentant le couple de prélèvement de la machine électrique selon le procédé de pilotage en fonction de la consigne de couple du conducteur;
- la figure 4 est un schéma représentant un dispositif de supervision du groupe motopropulseur selon l'invention.

L'invention concerne plus particulièrement un véhicule hybride électrique. Le véhicule est de préférence, mais non nécessairement, un véhicule rechargeable sur un réseau électrique externe. L'invention propose un procédé de pilotage d'une première machine électrique apte à recharger un accumulateur électrique de haute puissance dédié à l'alimentation d'une deuxième machine électrique de traction. Le procédé de pilotage est prévu pour limiter les nuisances acoustiques et vibratoires du groupe motopropulseur, notamment en diminuant la recharge en cas d'augmentation de la consigne du conducteur. Toutefois, le procédé assure un niveau de recharge minimum de l'accumulateur électrique pour alimenter la traction électrique du véhicule, lequel est piloté avantageusement en fonction de la consigne du conducteur pour ne pas déranger le conducteur.

Dans un premier temps, nous décrirons des architectures de groupe motopropulseur apte à mettre en œuvre le procédé de pilotage selon l'invention. Les figures 1 et 1bis représentent des exemples de schéma d'un tel groupe motopropulseur. Le groupe motopropulseur hybride 1 comprend une première machine électrique 13 pour la recharge d'accumulateurs électriques 16, 17, un premier train de roues avant tracté par un moteur thermique de traction 11 et un deuxième train de roue arrière tracté par une deuxième machine électrique de traction 19 sur la figure 1.

Sur la figure 1, le train de roues avant est relié à une boite de vitesses 10 effectuant la transmission aux roues avec le moteur thermique 11. Le moteur thermique 11 est apte à entrainer la première machine électrique 13 au moyen d'un dispositif de transmission 12, par exemple une courroie ou un dispositif de couplage. Le moteur thermique 11 fournit un couple moteur réparti notamment pour les besoins de la consigne de couple conducteur aux roues et les besoins de recharge électrique. Un démarreur 14 permet également de fournir une assistance au démarrage au moteur thermique 11. Dans une variante, le groupe motopropulseur 1 n'est pas équipé du démarreur d'assistance 14.

En fonctionnement de générateur, la première machine électrique 13 est entrainée par le moteur thermique 11 et prélève un couple de prélèvement au couple moteur du moteur thermique 11. Le couple de prélèvement de la première machine électrique 13 est calculé de sorte qu'il couvre d'une part les besoins d'alimentation du réseau de bord et des équipements du véhicule, et d'autre part les besoins de la traction électrique. Il est également prévu que la première machine électrique 13 puisse fonctionner comme un moteur électrique dans certaines situations de roulage, comme par exemple lors d'une phase de démarrage du moteur thermique 11.

Par ailleurs, le groupe motopropulseur 1 comprend un accumulateur électrique 17 qui est connecté à un réseau électrique basse tension, sur lequel la première machine électrique 13 et la deuxième machine électrique de traction 19 sont connectées via un onduleur 18. La première machine électrique 13 et la deuxième machine électrique de traction 19 sont aptes à recharger l'accumulateur électrique 17 pour les besoins de la traction électrique du groupe motopropulseur 1.

Un convertisseur de tension 15 est connecté au réseau basse tension d'une part, et à un réseau très basse tension d'autre part. Le réseau très basse tension alimente un deuxième accumulateur électrique 16, le réseau de bord et le démarreur 14. On notera que le réseau très basse tension est principalement alimenté par la première machine électrique 13 pour maintenir un niveau d'énergie suffisant dans l'accumulateur 16 et à garantir le bon fonctionnement du réseau de bord.

On précise que le procédé de pilotage de la première machine électrique 13 mis en œuvre par l'invention s'adresse plus spécifiquement au calcul du couple de prélèvement dédié au besoin de la recharge de la traction électrique. Le couple de prélèvement décrit dans la suite de la description concerne le couple calculé pour recharger l'accumulateur 17 qui alimente la deuxième machine électrique de traction 19.

Plus précisément, la traction électrique du groupe motopropulseur 1 comprend la deuxième machine électrique de traction 19 attelée au train arrière. Une transmission comprenant un dispositif de couplage 191 relie mécaniquement la deuxième machine électrique de traction aux roues du train arrière. La deuxième machine électrique de traction 19 est une machine électrique réversible qui, dans le référentiel de son rotor, peut fournir un couple aux roues lors d'une accélération du véhicule ou un couple de recharge électrique lors d'une décélération du véhicule. On notera par ailleurs que le train arrière tracté par la deuxième machine électrique de traction 19 et le train avant tracté par le moteur thermique 11 sont mécaniquement indépendants.

On précise que d'autres architectures de groupe motopropulseur hybrides sont aptes à mettre en œuvre le procédé de pilotage selon l'invention. Par exemple, dans une variante représentée en figure 1bis, le groupe motopropulseur 1 se différencie du groupe motopropulseur présenté en figure 1 du fait que la deuxième machine électrique de traction 19 est attelée au même train de roues que le moteur thermique de traction 11. Sur la figure 1bis, les éléments formant le groupe motopropulseur 1 sont désignés par les mêmes références que sur la figure 1. Les adaptations de transmission mécanique et le calcul du couple de prélèvement de la machine électrique sauront être adaptés par l'homme du métier sans sortir du cadre de l'invention.

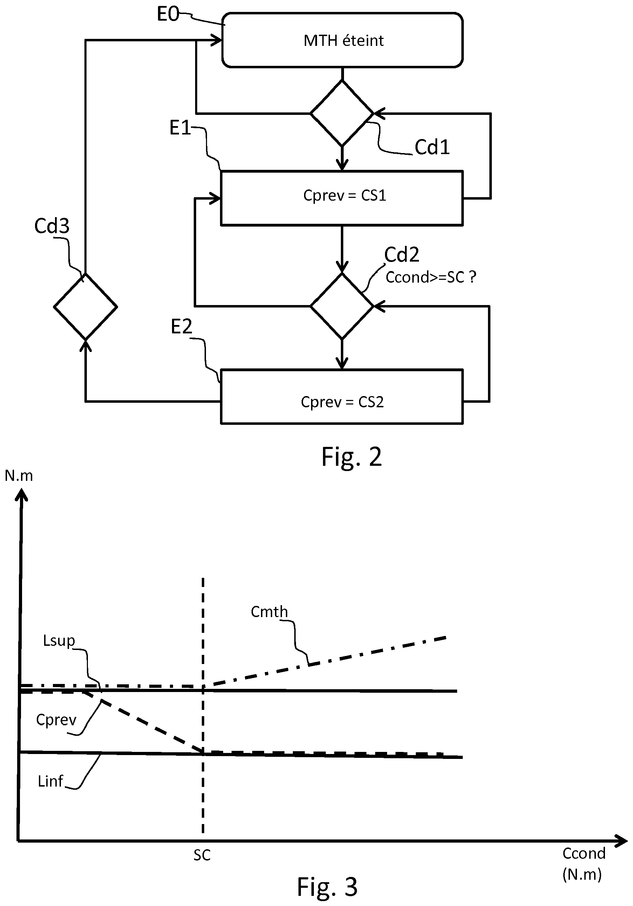

Plus précisément, la figure 2 représente un mode de réalisation du procédé de pilotage de la machine électrique 13 selon l'invention permettant de maintenir un niveau de recharge de l'accumulateur électrique 17. A une étape initiale E0, indiquée par la mention MTH éteint, le moteur thermique 11 est éteint, la première machine électrique 13 n'est pas en situation de recharge électrique. Lorsque le moteur thermique 11 est démarré, événement correspondant à la référence Cd1 sur le graphique, la première machine électrique 13 peut prélever un couple de prélèvement sur le couple fourni par le moteur thermique 11. L'opération du couple de prélèvement Cprev peut toutefois être conditionné à d'autres paramètres, par exemple un besoin de recharge électrique, un niveau de charge de l'accumulateur 17, les conditions de fonctionnement du moteur thermique, un niveau de couple moteur et un régime moteur.

En prenant l'hypothèse que les conditions d'opération du couple de prélèvement Cprev sont réunies pour sa commande, pour limiter le niveau de bruit acoustique du groupe motopropulseur 1, à une étape E1, la première machine électrique 13 est pilotée de sorte que le couple de prélèvement Cprev soit piloté à une première consigne CS1 égale à une limite supérieure de couple Lsup prédéterminée de laquelle est soustrait le couple de consigne du conducteur Ccond. La limite supérieure assure au moins un rechargement de l'accumulateur électrique de puissance 17.

On rappelle que le couple fourni par le moteur thermique 11 est calculé pour couvrir le besoin du couple de consigne du conducteur correspondant à la volonté du conducteur pour accélérer et ralentir afin d'atteindre une vitesse du véhicule voulue, ainsi que le besoin de recharge de l'accumulateur électrique 17 et le besoin d'alimentation du réseau de bord. Le couple moteur fourni par le moteur thermique 11 est donc égal à la somme du couple de prélèvement Cprev et du couple de consigne conducteur Ccond. A l'étape E1, le couple moteur est donc limité en couple à la limite supérieure prédéterminée, du fait de l'amputation du couple de consigne conducteur au couple de prélèvement Cprev, qui correspond à un niveau de bruit acoustique du groupe motopropulseur acceptable pour les passagers.

Lorsqu'une condition Cd2 est respectée et qui correspond à la situation pour laquelle la consigne de couple du conducteur est supérieure à un seuil de couple prédéterminé SC, le procédé est configuré à une étape E2 pour que le couple de prélèvement Cprev soit piloté à une deuxième consigne CS2 égale à une limite inférieure de couple Linf prédéterminée. Cette limite inférieure, considérée comme une limite planchée, empêche une réduction continue du couple de prélèvement Cprev et permet d'assurer le rechargement de l'accumulateur de puissance 17. Dans cette situation, l'augmentation du couple moteur total fourni par le moteur thermique 11 est acceptable d'un point de vue acoustique car le conducteur agit avec une forte volonté sur la pédale d'accélération. L'augmentation du bruit du groupe motopropulseur ressentie dans l'habitacle est acceptable dans cette situation car elle est associée à sa demande de couple.

Plus précisément, la limite inférieure de couple Linf est configurée de sorte qu'un niveau de recharge de l'accumulateur électrique 17 résultant du couple de prélèvement Cprev soit égal à un niveau de recharge prédéterminé de l'accumulateur électrique 17.

De plus, le seuil de couple SC est configuré de sorte qu'il soit égal à la différence de couple entre la limite supérieure Lsup et la limite inférieure Linf. Le seuil de couple est prédéterminé lors des configurations des fonctions de pilotage de la machine de électrique 13 et correspond à une position de la pédale d'accélération pour laquelle le conducteur exercera une forte demande. Cette configuration assure également une continuité du couple de prélèvement ne provoquant pas de changement de couple brusque lors du passage du seuil de couple SC.

Lorsque le moteur thermique 11 est éteint, il s'agit d'un événement correspondant au contrôle de la condition Cd1 ou Cd3, le procédé retourne à l'étape initiale E0.

Par ailleurs, il est prévu que la limite supérieure Lsup et la limite inférieure Linf sont de valeur constante lorsque la vitesse du véhicule est inférieure à un seuil de vitesse du véhicule, par exemple déterminé à 25km/h. A basse vitesse, le bruit du groupe motopropulseur est prédominant au regard du bruit du roulage et de l'aérodynamique. Ces limites constantes assurent un contrôle acoustique. Toutefois, le procédé est configuré pour que la limite inférieure Linf et la limite supérieure Lsup soient augmentées en fonction de la valeur de la vitesse du véhicule lorsqu'il roule à une vitesse supérieure au dit seuil de vitesse. Le procédé tire ainsi profit du bruit aérodynamique et du roulage pour augmenter le niveau de recharge de l'accumulateur électrique 17.

La figure 3 représente à titre d'exemple non limitatif, le couple de prélèvement Cprev de la première machine électrique 13 pour une situation d'augmentation de la consigne de couple du conducteur Ccond. En abscisse on représente la consigne de couple du conducteur Ccond et le seuil de couple SC, par exemple déterminé à 30N.m. En ordonnée on représente en unité de N.m, le couple de prélèvement Cprev par la ligne pointillée, la limite inférieure de couple Linf et la limite supérieure de couple Lsup par les lignes continues. A titre d'exemple non limitatif, les limites inférieure et supérieure Linf, Lsup sont constantes à 30N.m et 60N.m respectivement. On notera que les limites inférieure et supérieure Lsup, Linf correspondent à des niveaux de recharge électrique assurant au moins une recharge de l'accumulateur de puissance 17 et si besoins les besoins vitaux du réseau de bord. De plus, le couple moteur Cmth est représenté par une deuxième ligne en pointillée. Comme rappelé précédemment dans la description le couple moteur Cmth est égal à la somme du couple de prélèvement et de la consigne de couple du conducteur Ccond.

Lorsque la consigne de couple du conducteur Ccond est nulle, le couple de prélèvement Cprev est égal à la limite supérieure Lsup ainsi que le couple moteur du moteur thermique. Ceci permet de contrôler l'émission de bruit du groupe motopropulseur à un niveau acceptable.

Lorsque la consigne de couple du conducteur augmente, le couple de prélèvement Cprev diminue, et le couple moteur Cmth reste constant, toujours à un niveau égal à la limite Lsup définie par la contrainte acoustique.

Lorsque la consigne de couple du conducteur Ccond est supérieure au seuil de couple SC, le couple de prélèvement Cprev est limité à la limite inférieure Linf. La limite inférieure Linf assure au moins un niveau de recharge de l'accumulateur électrique 17.

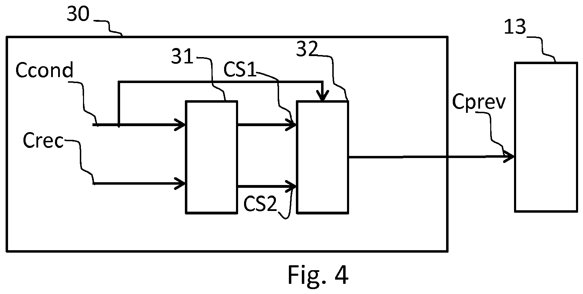

La figure 4 représente le dispositif de supervision 30 du groupe motopropulseur hybride 1, et plus spécifiquement les fonctions du procédé de pilotage de la première machine électrique. Le dispositif de supervision 30 comprend des moyens de calcul 31 pour déterminer la valeur de la première consigne CS1 et de la deuxième consigne CS2 en fonction des paramètres correspondant à la consigne de couple conducteur Ccond et d'une consigne de recharge Crec, ce dernier paramètre pouvant être un signal de déclenchement de la recharge dépendant notamment du niveau de charge de l'accumulateur électrique 17. Les moyens de calcul 31 comprennent une interface d'acquisition pour les dits paramètres en entrée et une interface de sortie pour transmettre les consignes de couple CS1, CS2 à des moyens de pilotage 32 de la première machine électrique 13.

Le dispositif de supervision 30 comprend également les moyens de pilotage 32 transmettant la consigne du couple de prélèvement Cprev à la première machine électrique 13. En particulier, les moyens de pilotage sont commandés par le paramètre de la consigne de couple du conducteur Ccond et le seuil de couple SC prédéterminé pour piloter la première machine électrique 13 conformément à la première consigne de couple CS1 ou la deuxième consigne de couple CS2.

On notera que la consigne de couple du conducteur Ccond est déterminée par le dispositif de supervision en fonction de la position de la pédale d'accélérateur et le cas échéant d'un paramètre de comportement de roulage du véhicule, par exemple un mode de roulage sportif, ou mode économique. Par ailleurs, le seuil de couple prédéterminé SC pour le pilotage de la première consigne de couple CS1 ou la deuxième consigne de couple CS2 est un paramètre enregistré dans une mémoire du dispositif de supervision 30 et exploité dans les programmes de pilotage de la première machine électrique 13. Le seuil de vitesse mentionné précédemment dans la description pour augmenter les limites inférieure et supérieure est également un paramètre enregistré dans le dispositif de supervision 30.

## Revendications

1. Procédé de pilotage d'une première machine électrique (13) d'un groupe motopropulseur hybride (1) d'un véhicule automobile comprenant un moteur thermique de traction (11) et une deuxième machine électrique de traction (19) alimentée par un accumulateur électrique (17), et dans lequel le moteur thermique de traction (11) fournit un couple moteur (Cmth) calculé pour couvrir au moins des besoins d'un couple de consigne du conducteur (Ccond) dédié à un couple aux roues du véhicule et d'un couple de prélèvement (Cprev) prélevé par la première machine électrique (13) pour au moins recharger l'accumulateur électrique (17), le couple de prélèvement (Cprev) étant piloté à une première consigne (CS1) égale à une limite supérieure de couple (Lsup) prédéterminée de laquelle est soustrait le couple de consigne du conducteur (Ccond) et, lorsque le couple de consigne du conducteur (Ccond) est supérieur à un seuil prédéterminé (SC), le couple de prélèvement (Cprev) étant piloté à une deuxième consigne (CS2) égale à une limite inférieure de couple (Linf) prédéterminée, ledit procédé étant **caractérisé en ce que** la limite supérieure de couple (Lsup) est configurée de sorte que le bruit acoustique généré par le groupe motopropulseur (1) soit inférieur à une contrainte acoustique prédéterminée, la limite supérieure (Lsup) et la limite inférieure (Linf) étant de valeur constante lorsque la vitesse du véhicule est inférieure à un seuil de vitesse du véhicule, et la limite inférieure (Linf) et la limite supérieure (Lsup) étant augmentées en fonction de la valeur de la vitesse du véhicule lorsqu'il roule à une vitesse supérieure au dit seuil de vitesse.

2. Procédé de pilotage selon la revendication 1, **caractérisé en ce que** la limite inférieure de couple (Linf) est configurée de sorte qu'un niveau de recharge de l'accumulateur électrique (17) résultant du couple de prélèvement (Cprev) soit égal à un niveau de recharge prédéterminé de l'accumulateur électrique (17).

3. Procédé de pilotage selon l'une quelconque des revendications précédentes, **caractérisé en ce que** le seuil de couple (SC) est configuré de sorte qu'il soit égal à la différence de couple entre la limite supérieure (Lsup) et la limite inférieure (Linf).

4. Véhicule automobile comprenant un groupe motopropulseur hybride (1) configuré pour mettre en œuvre le procédé selon l'une quelconque des revendications 1 à 3.

## Patentansprüche

1. Steuerverfahren einer ersten elektrischen Maschine (13) eines Hybridantriebsstrangs (1) eines Kraftfahrzeugs, das eine Brennkrafttraktikonsmaschine (11) und eine zweite elektrische Traktionsmaschine (19) umfasst, die von einem Stromspeicher (17) versorgt wird, und wobei die Brennkrafttraktikonsmaschine (11) ein Motordrehmoment (Cmth) liefert, das berechnet wird, um mindestens den Bedarf an einem Solldrehmoment des Fahrers (Ccond) zu decken, das einem Drehmoment an den Rädern des Fahrzeugs gewidmet ist, und ein Entnahmedrehmoment (Cprev), das von der ersten elektrischen Maschine (13) entnommen wird, um mindestens den Stromspeicher (17) aufzuladen, wobei das Entnahmedrehmoment (Cprev) auf einen ersten Sollwert (CS1) gleich einem vorbestimmten oberen Drehmomentlimit (Lsup), von dem das Solldrehmoment des Fahrers (Ccond) abgezogen wird, gesteuert wird, und, wenn das Solldrehmoment des Fahrers (Ccond) größer ist als ein vorbestimmter Schwellenwert (SC), das Entnahmedrehmoment (Cprev) auf einen zweiten Sollwert (CS2) gleich einem unteren vorbestimmten Drehmomentlimit (Linf) gesteuert wird, wobei das Verfahren **dadurch gekennzeichnet ist, dass** das obere Drehmomentlimit (Lsup) derart konfiguriert ist, dass der akustische Schall, der von dem Antriebsstrang (1) erzeugt wird, kleiner ist als eine vorbestimmte akustische Auflage, wobei das obere Limit (Lsup) und das untere Limit (Linf) einen konstanten Wert aufweisen, wenn die Geschwindigkeit des Fahrzeugs kleiner ist als ein Geschwindigkeitsschwellenwert des Fahrzeugs, und das untere Limit (Linf) und das obere Limit (Lsup) in Abhängigkeit von dem Geschwindigkeitswert des Fahrzeugs erhöht werden, wenn es mit einer Geschwindigkeit fährt, die größer ist als der Geschwindigkeitsschwellenwert.

2. Steuerverfahren nach Anspruch 1, **dadurch gekennzeichnet, dass** das untere Drehmomentlimit (Linf) derart konfiguriert ist, dass ein Aufladepegel des Stromspeichers (17), der aus dem Entnahmedrehmoment (Cprev) resultiert, gleich einem vorbestimmten Aufladepegel des Stromspeichers (17) ist.

3. Steuerverfahren nach einem der vorstehenden Ansprüche, **dadurch gekennzeichnet, dass** der Drehmomentschwellenwert (SC) derart konfiguriert ist, dass er gleich dem Drehmomentunterschied zwischen dem oberen Limit (Lsup) und dem unteren Limit (Linf) ist.

4. Kraftfahrzeug, das einen Hybridantriebsstrang (1) umfasst, der konfiguriert ist, um das Verfahren nach einem der Ansprüche 1 bis 3 umzusetzen.

## Claims

1. A method for controlling a first electrical machine (13) of a hybrid powertrain (1) of a motor vehicle including a heat traction engine (11) and a second electrical traction machine (19) supplied by an electrical storage battery (17), and in which the heat traction engine (11) provides an engine torque (Cmth) calculated to cover at least the needs of a setpoint torque by the driver (Ccond) dedicated to a torque at the wheels of the vehicle and of a drawing torque (Cprev) drawn by the first electrical machine (13) for at least recharging the electrical storage battery (17), the drawing torque (Cprev) being controlled at a first setpoint (CS1) equal to a predetermined upper torque limit (Lsup) from which the setpoint torque by the driver (Ccond) is subtracted and, when the setpoint torque by the driver (Ccond) is greater than a predetermined threshold (SC), the drawing torque (Cprev) being controlled at a second setpoint (CS2) equal to a predetermined lower torque limit (Linf), said method being **characterized in that** the upper torque limit (Lsup) is configured so that the acoustic noise generated by the powertrain (1) is less than a predetermined acoustic stress, the upper limit (Lsup) and the lower limit (Linf) being of constant value when the speed of the vehicle is less than a speed threshold of the vehicle, and the lower limit (Linf) and the upper limit (Lsup) being increased as a function of the value of the speed of the vehicle when it is travelling at a higher speed than said speed threshold.

2. The method for controlling according to Claim 1, **characterized in that** the lower torque limit (Linf) is configured so that a recharge level of the electrical storage battery (17) resulting from the drawing torque (Cprev) is equal to a predetermined recharge level of the electrical storage battery (17).

3. The method of controlling according to any one of the preceding claims, **characterized in that** the torque threshold (SC) is configured so that it is equal to the torque difference between the upper limit (Lsup) and the lower limit (Linf).

4. A motor vehicle including a hybrid powertrain (1) configured to implement the method according to any one of Claims 1 to 3.
